# EUROPEAN PATENT SPECIFICATION

(11) **EP 3 475 353 B1**
(45) Date of publication and mention of the grant of the patent: **25.01.2023**
(21) Application number: 17737736.3
(22) Date of filing: 26.06.2017
(51) Int. Cl.: C08J 11/06, C08L 67/02, D06N 7/00, C09J 167/02

(54) **A METHOD TO RECYCLE A FIBROUS CARPET PRODUCT**
VERFAHREN ZUR WIEDERVERWERTUNG EINES FASERIGEN TEPPICHPRODUKTS
PROCÉDÉ POUR RECYCLER UN PRODUIT DE TAPIS FIBREUX

(30) Priority: 27.06.2016 EP 16176519
(43) Date of publication of application: 01.05.2019
(73) Proprietor: Covestro (Netherlands) B.V., 6167 RD Geleen (NL)
(72) Inventor: UDDING, Jan Henderikus, 6100 AA Echt (NL); REUTELINGSPERGER, Chris, 6100 AA Echt (NL)
(74) Representative: Levpat
(86) International application number: PCT/EP2017/065733
(87) International publication number: WO 2018/001976

(56) References cited:
- US-A1- 2014 272 262

## Description

### GENERAL FIELD OF THE INVENTION

The invention in general pertains to a method for recycling a carpet product, the carpet product comprising a fibrous sheet comprising polymer yarns, wherein at least one surface of the sheet is provided with a layer of polymer adhesive. The invention also pertains to recycled polymer obtainable by this method, to fibres comprising this recycled polymer material, to fibrous products comprising these fibres and to polyester adhesive.

### BACKGROUND ART

Carpet (such as broadloom carpet, a carpet tile, a mat, rug, a runner etc.) is typically used to cover floors, walls, interiors of cars, planes, boats etc. to provide a comfortable feel and pleasant look. Carpets typically comprise a fibrous sheet with polymer yarns as a basic constituent. For example, most carpets are produced by stitching a polymer yarn onto a primary backing to provide a pile of the polymer yarns protruding from a top surface of the backing. The backing is typically provided with a polymer adhesive such as a latex, a cross-linkable polymer or a hot melt adhesive, for example to bind the yarns to the primary backing and/or to bind the primary backing to another surface, such as a secondary backing or the surface to be covered by the carpet. Regarding the secondary backing, such a backing is typically used to improve mechanical properties such as dimensional stability of the carpet. The secondary backing can e.g. be a bituminous layer, a plastic sheet or a fibrous sheet comprising polymer yarns (such as a dense felted layer).

Carpet is used everywhere: in homes, offices, cars, planes, schools etc. Used carpet therefore is the source of one of the biggest waste streams in the world. Adequate recycling of carpet products (carpet and parts of carpet) therefore is of the utmost importance to provide new carpet in a sustainable way. In the art numerous methods for producing carpet aimed at the possibility of recycling thereof have been described.

Latex-based textile products use dissimilar materials for the components within the primary layer and the secondary layers, and thus each of these components would need to be separated if they were to be recovered and reused. However, the yarns and primary backing are strongly embedded in the chemically cross-linked (e.g. vulcanised) latex adhesive. Thus, in a latex based textile product the components of the primary layer are not easily separated. Although some recycle technologies have been developed to address some of these issues, such methods are expensive and do not allow complete recycling of all the materials used. As a result, it is impractical to recycle latex-based textile floor coverings and these are simply discarded, burned or shredded. To address some of these issues, various synthetic polymers have been developed to replace latex polymers in textile products.

EP747525 (BASF) describes a recyclable carpet prepared from a backing comprising protruding tufts (preferably of the same material as the backing), with a carrier of a thermoplastic substrate bound to the backside of the primary backing with hot melt adhesive (HMA). The backing and tufts are made from materials such as nylon, polyolefin and/or polyester and the thermoplastic carrier from materials such as polyolefins, ethylene vinyl acetate (EVA) and/or polyvinyl chloride (PVC). The HMA is applied to the back surface of the primary backing to lock the tufts in place and to act as a buffer between the backing and carrier, so is selected to be compatible with the polymers of the backing and of the carrier. A preferred HMA is caprolactam-based copolyamide, although compatible polyolefins and/or copolyester adhesives may also be used. The carpet may be recycled by heating to a temperature sufficient to (re)soften the HMA but below the melting point of the polymers of the tufted backing and carrier substrate so the carpet separates into its two constituent layers. The processes mentioned for actual recycling of the tufted primary backing material are cutting, pelletizing and depolymerisation.

US5240530 (Tennessee Valley Performance Products) describes a recyclable carpet having a primary backing comprising protruding tufts of synthetic fibres which is heated to fuse the primary backing to a secondary backing of an extruded sheet made from for example an isotactic polyolefin. The primary and secondary backing and fibres may all comprise thermoplastics. This reference teaches the reader directly not to use either conventional latex adhesives or hot melt adhesives as both are stated to "prevent carpet from being recycled" (col. 4, lines 16 to 17).

US5538776 (Hoechst Celanese) describes a recyclable thermoplastic tufted carpet made of a primary backing with tufts and a secondary backing attached to the primary with a layer of a polyester hot melt adhesive. The HMA takes the place of latex adhesive (see col. 2, lines 50 to 51) and the tufts, primary backing, the HMA and secondary backing are made from one type of thermoplastic polymer (preferably polyester). So the carpet can be recycled through known methods, such as processes to recycle polyesters by glycolysis or methanolysis, and/or extrusion, whereby the specific recycling process is determined by the type of polyester. Similarly, US 2014/272262 (Milliken) describes tufted carpet tile products made from polyester that meet commercial performance specifications and are fully end-of-life recyclable such as via the methods specified above.

EP1598476 (Klieverik Heli) describes a method for manufacturing a backing as an intermediate for making a carpet, where the backing does not use a latex to anchor the fibres (yarn) in place. The backing comprises a sheet with piles of thermoplastic fibres stitched through the thickness of the sheet and protruding from its upper surface. The backing is fed (fibre upwards) along a heated roller surface and its underside is pressed against the roller so the fibres will melt. Klieverik states that after cooling the fibres are firmly anchored to each other and to the backing without the need for a latex polymer. One embodiment teaches that a thermoplastic adhesive (such as hot melt adhesive) may be applied additionally as a powder to the underside of the backing so the heated surface melts the fibre and adhesive together to create a good adhesion between the piles, the adhesive and the backing. In another embodiment pressure may be applied after heating (e.g. by a pressure roller) to the backing and piles in a direction perpendicular to the backing surface (i.e. from below) to smear the plasticised fibres together to enhance their mutual adhesion, thus allowing the heated roller to be held at a lower temperature, below that at which the fibres would fuse by heat alone. This method provides the advantage that the intermediate backing can be easily recycled as the fibre and backing sheet can be made from the same polymer. There is no incompatible latex penetrated into the fibre piles (see paragraph [003]). There is also saving in energy and raw material costs compared to prior art methods. However, this method still has some disadvantages. The fibre is still insufficiently strongly anchored to the backing for use in many applications, for example where fibre is subjected to high mechanical loads (e.g. in the interior of cars, trains, planes, offices, shops etc.). Thus in practise to make carpets from the intermediate backings described by Klieverik it will still be necessary to apply additional (incompatible) adhesive or latex to the to recycle.

WO 2012/076348 (Niaga) describes a method for making carpet that improves the anchor strength of the yarn. In this method when the first yarn bearing sheet is pressed against the heated surface, the relative speed of the sheet and surface are adjusted to provide an additional mechanical force between them in the machine direction which spreads the material of the yarn whilst it is still molten resulting in a stronger bond between the first sheet and the yarn. Though in theory in many cases an additional secondary support layer may no longer be necessary, this document does teach that such a support layer may still be useful, especially if it comprises a reactive adhesive relying on thermally reversible reactions between reactive molecules present at the interface between the textile product and the carrier material. Such reactive adhesives provide a much stronger bond than is typically achieved by other types of adhesives such as hot melt adhesives. However, whilst use of reactive adhesive provides a strong bond and can be recycled (unlike the latex) its use still leads to a textile product that does not have optimal mechanical properties. A further disadvantage of using a chemically reactive adhesive is that both the components to be joined and the adhesive must carry co-reactive groups. Thus the polymer used to prepare the primary backing and/or tufts is likely to require chemical modification in an additional step as standard commercial polymers may not contain the required functional groups to be suitable for use with reactive adhesives.

WO2014/198731 (DSM IP Assets BV) describes a method of making carpet that is based on the technology as known from WO 2012/076348 (Niaga) with the proviso that a hot melt adhesive is used at the back of the primary backing, typically for bonding the primary backing to a secondary backing to form a laminate. The patent publication recognises (page 22, first two paragraphs) that this opens the route for using the same (chemical) type of polymer for the yarns as well as the adhesive. It is stated that if the melting points of these materials are comparable, the materials can be recycled together and no separation is necessary. However, in a carpet product, the yarns of the fibrous sheet typically have to fulfil completely other demands (high durability, resiliency, stain resistance etc.) than the polymer as used in the adhesive (good glueing properties, and easy to apply at relatively low temperatures). This explains why the polymer as used in the fibres typically has a high molecular weight (Mw over 50,000 g/mol, thus over 5×10⁴ g/mol, or even over 75,000 g/mol) and a melting point in the range of 180-300°C (typically between 220 and 280°C). The polymer that is used as an adhesive is a completely different type of polyester. Such an adhesive is a low molecular weight material (Mw below 35,000 g/mol, typically between 15,000 and 30,000 g/mol), and has a melting point in the range of 50-150°C. The viscosity is typically very low at a temperature of about 100-160°C to enable applying the adhesive well below the melting temperature of the yarn material. In line with the teachings of WO2014/198731, these materials cannot be recycled together and separation is necessary making the recycling process relatively complex.

In short, although the art describes multiple ways to produce a carpet that can be recycled, it appears that such recycling of a carpet or carpet products is not straightforward.

### OBJECT OF THE INVENTION

It is an object of the invention to provide a method to recycle a carpet product, which method is easy to perform and leads to a recycled product with is easy to re-use.

### SUMMARY OF THE INVENTION

In order to meet the object of the invention, a method as described here above in the GENERAL FIELD OF THE INVENTION section has been devised, the method being characterised in that the carpet product is a substantially pure polyester carpet product wherein the polymer yarns comprise polyester having a molecular weight (i.e. Mw, the weight average molecular weight) above 50,000 g/mol (in practice below 100,000 g/mol) and a melting point between 180 and 300°C, and the adhesive is a polyester adhesive having a crystallinity between 5% and 35% and a viscosity of 5-55 Pa.s at 150°C, the method comprising homogenising the carpet product by extrusion.

Although extrusion is mentioned in the art to be used to reprocess recycled plastic waste or other raw materials (see for example WO2014/198731), this is typically done after cleaning, sorting and/or pre-blending of a molten mixture of the materials. In particular the sorting and optional pre-blending are important since the flow through extruders may be completely disturbed when different polymer materials, in particular materials differing in physical properties, are being extruded together. In particular when a low viscosity material is mixed with a high viscosity material, the flow through the extruder is often blocked completely. When all materials are melted in the extruder, the low viscosity material typically forms a lubricant between the screw(s) and the stationary barrel, such that the pumping and therewith mixing action is halted completely. In practice, this process starts with a decrease in output at the downstream end showing as a sputtering of extruded material at the output end instead of a continuous flow, the sputtering soon transforming in a total loss of material flow. This is in particular true for the most common type of extruders, such as single screw extruders or fully intermeshing twin screw extruders (using co-rotating screws), since these type of extruders necessarily rely on high shear forces between the moving parts in the extruder. Therefore, mixtures of materials to be recycled by extrusion are often sorted to obtain a match in physical properties (for example by matching viscosities, or polymer weights and type), and, if a good match cannot be obtained, the materials are melt-blended before being extruded to minimise the change of de-mixing during extrusion. This is in particular true in case the amount of low viscosity material exceeds 0.5% (w/w), such as 0.6, 0.7, 0.8, 0.9, 1.0, 1.5, 2.0, 2.5, 3.0% or above. For any carpet product to be recycled involving an extrusion step, the carpet, which is intrinsically a mixture of different polymer materials, has to be transformed into separate virgin materials or pre-blended to form a new material (no longer a carpet product) before the extrusion step takes place.

Surprisingly, the current inventors found that in case of recycling a polyester carpet product, it is possible to homogenise the carpet product itself by feeding it directly into an extruder, for example a single screw extruder or a fully intermeshing twin screw extruder. This is despite the presence of a low molecular weight polyester adhesive next to the typical high molecular weight polyester for the fibrous sheet, and even when the amount of this low molecular weight adhesive exceeds 0.5% (w/w). In particular the viscosities of these materials are inherently so different that co-extrusion was not believed to be possible: the high molecular weight polyester of the fibrous material (Mw over 50,000 g/mol, preferably over 60,000 g/mol, typically between 70,000 and 100,000 g/mol) with its melting point in the range of 180-300°C (typically between 220 and 280°C, more typically between 240 and 260°C), has a melt viscosity that is so high (in Pa.s) that it can only be measured in a solution as a so-called intrinsic viscosity (thus measured when the polymer molecules are in solution). The intrinsic viscosity of such high molecular weight polyester for use in fibrous carpet products is between 0.4 and 1.0 (dL/g), typically between 0.6 and 0.9 (dL/g). On the contrary, the polyester that is used as an adhesive, having a low molecular weight (Mw), being semi-crystalline to crystalline, has a melting point in the range of 50-150°C and a melt viscosity typically below 500 Pa.s at 150°C, commonly below 250 Pa.s or even below 150 Pa.s. Despite this significant difference in viscosity it appears that it is possible to directly extrude the carpet product without prior transformation into separate virgin materials, or pre-blending of the different materials, in order to obtain an adequate extrusion process for recycling of the carpet product as a whole. It was found that this new process of direct extrusion of the carpet product can be arrived at when the polymer adhesive meets certain very stringent mechanical demands, viz. a crystallinity between 5% and 35% and a viscosity between 5-55 Pa.s at 150°C. Regarding the crystallinity, this can have any value between 5 and 35% such as 6, 7, 8, 9, 10, 11, 12, 13, 14, 15, 16, 17, 18, 19, 20, 21, 22, 23, 24, 25, 26, 27, 28, 29, 30, 31, 32, 33, and 34%. Typical ranges are 5-30 and 10-30%. Regarding the melt viscosity, even though this viscosity of the polyester adhesive is extremely low with respect to the polymer of the fibrous sheet material, and can have any value between 5 and 55 Pa.s such as 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53 and 54 Pa.s, when adopting the proper crystallinity range, in this particular case of a substantially pure polyester product, the extrusion process of the combination product can be conducted reliably. The reason for this is not clear. It is believed that it is related to an adequate physical-chemical interaction between the two types of polymer that prevents the de-mixing during extrusion. The match in chemistry between the two types of polyester, in combination with the specified crystallinity and viscosity of the polyester adhesive seems essential for an adequate interaction. The gist of the invention is therefore also embodied in the new adhesive having these specific chemical and physical properties, which makes the adhesive suitable for co-extrusion with existing polyesters that are being widely used for providing yarn material for textile products, in particular for carpet products, to end up with a new extruded homogeneous material.

The invention in general is restricted to the use of polyester polymer to constitute the carpet product. The esterification polymerisation processes for making the polyester for use in the invention composition are well known in the art and need not be described here in detail.

It is commonly known that polyesters contain carbonyloxy (i.e. -C(=O)-O-) linking groups which may be prepared by a condensation polymerisation process in which monomers providing an "acid component" (including ester-forming derivatives thereof) are reacted with monomers providing a "hydroxyl component". The monomers providing an acid component may be selected from one or more polybasic carboxylic acids such as di- or tri-carboxylic acids or ester-forming derivatives thereof such as acid halides, anhydrides or esters. The monomers providing a hydroxyl component may be one or more polyhydric alcohols or phenols (polyols) such as diols, triols, etc. It is to be understood, that the polyester resins described herein may optionally comprise autoxidisable units in the main chain or in side chains and such polyesters are known as autoxidisable polyesters. If desired the polyesters may also comprise a proportion of carbonylamino linking groups -C(=O)-NH- (i.e. amide linking group) or -C(=O)-N-R²-(tertiary amide linking group) by including an appropriate amino functional reactant as part of the hydroxyl component or alternatively all of the hydroxyl component may comprise amino functional reactants, thus resulting in a polyester amide resin. Such amide linkages are in fact useful in that they are more hydrolysis resistant.

There are many examples of carboxylic acids (or their ester forming derivatives such as anhydrides, acid chlorides or lower (i.e. C₁₋₆alkyl esters)), which can be used as monomers providing an acid component in polyester synthesis. Examples include, but are not limited to monofunctional acids such as (alkylated) benzoic acid and hexanoic acid; and C₄₋₂₀ aliphatic, alicyclic and aromatic dicarboxylic acids (or higher functionality acids) or their ester-forming derivatives.

Examples of suitable acids and derivatives thereof that may be used to obtain a polyester may comprise any of the following: adipic acid, fumaric acid, maleic acid, citric acid, succinic acid, itaconic acid, azelaic acid, sebacic acid, suberic acid, pimelic acid, nonanedioic acid, decanedioic acid, 1,4-cyclohexanedicarboxylic acid, 1,3-cyclohexanedicarboxylic acid, 1,2-cyclohexanedicarboxylic acid, terephthalic acid, isophthalic acid, sulfoisophthalic acids and/or metal salts thereof (e.g. 5-sodiosulpho isophthalic acid), phthalic acid, tetrahydrophthalic acid, 2,5-furanedicarboxylic acid (FDCA), any suitable mixtures thereof, combinations thereof and/or any suitable derivatives thereof (such as esters, e.g. di(C₁₋₄alkyl) esters, metal salts and/or anhydrides). Suitable anhydrides include succinic, maleic, phthalic, trimellitic and hexahydrophthalic anhydrides.

Similarly, there are many examples of polyols which may be used as monomers providing a hydroxyl component in (optionally autooxidisable) polyester resin synthesis. The polyols preferably have from 1 to 6 (more preferably 2 to 4) hydroxyl groups per molecule. Suitable monofunctional alcohols include for example eicosanol and lauryl alcohol. Suitable polyols with two hydroxy groups per molecule include diols such as 1,2-ethanediol, 1,3-propanediol, 1,4-butanediol, 2,3-butanediol, 1,6-hexanediol, 2,2-dimethyl-1,3-propanediol (neopentyl glycol), the 1,2-, 1,3- and 1,4-cyclohexanediols and the corresponding cyclohexane dimethanols, diethylene glycol, dipropylene glycol, and diols such as alkoxylated bisphenol A products, e.g. ethoxylated or propoxylated bisphenol A. Suitable polyols with three hydroxy groups per molecule include triols such as trimethylol propane (TMP) and 1,1,1-tris (hydroxymethyl)ethane (TME). Suitable polyols with four or more hydroxy groups per molecule include bis-TMP, pentaerythritol (2,2-bis(hydroxymethyl)-1,3-propanediol), bis-pentaerythritol and sorbitol (1,2,3,4,5,6-hexahydroxyhexane). Examples of hydroxyl functional amines with both hydroxyl functionality and amine functionality are described in, for example, WO 00/32708, use of diisopropanol amine is preferred. These can be used to prepare polyester amide resins.

Elastomeric polyols may also be used as building blocks to prepare the polyester polymer (of the yarn and/or the adhesive) and suitable polyols may comprise dihydroxy-terminated polytetrahydrofuran (polyTHF), dihydroxy-terminated polypropylene glycol, dihydroxy-terminated polybutylene succinate, dihydroxy-terminated polybutylene adipate; other aliphatic polyesters with Tg below zero and two OH end groups; and/or any mixtures thereof and/or any combinations thereof. Examples of suitable copolyester elastomers that may be obtainable and/or obtained from such polyols are those available from DSM under the trade mark Arnitel^{®}.

The invention in general also requires the presence of a polymer adhesive in the carpet product. As used herein the term 'adhesive' denotes any composition that remains substantially tacky after drying under ambient conditions (i.e. which is not tack-free) for a length of time which would be commercially acceptable and practical for the intended use herein. Typical adhesive compositions may remain tacky for at least 16 hours after they have been applied to a surface. A particular class of polymer adhesives are the so-called hot melt adhesives (abbreviated to HMA herein). HMA's are well known to those skilled in the art and typically have a low amount of or are substantially free of solvent. They can be applied to a substrate as a fluid (e.g. by dipping or spraying), so the adhesive has a suitably low viscosity, is tacky when hot and then solidifies rapidly after application (typically in a few seconds to one minute), with little or no drying needed. Usefully the solid adhesive film may still remain tacky for some time after application to allow (re)positioning of the substrate to which it has been applied, though unlike pressure sensitive adhesives (PSA), typical HMA's are not permanently tacky. As HMA's comprise little or no solvent, unlike solvent based adhesives, the HMA film layer does not shrink or lose thickness as it solidifies.

An adhesive polymer such as a HMA can be used alone or combined or mixed with other adhesive types (such as reactive adhesives) for example in the same adhesive composition. Mixing the basic adhesive with other adhesive types can have some advantages. However if mixtures are used, it is preferred that the non-polyester type adhesive(s) form no more than 50%, more preferably less than 40%, even more preferably less than 30%, most preferably less than 20%, for example less than 10% by weight of the total weight of the adhesive mixture.

It is noted that the invention also pertains to recycled polyester obtainable by a method according to the invention as explained here above, to fibres comprising this polyester material, to fibrous products comprising these fibres and to polyester adhesive.

### DEFINITIONS

A *substantially pure* polyester product is a product of which the constituting parts consist at least for 95% (w/w), preferably at least 96%, 97%, 98%, 99% up to 100% (w/w) out of polyester, *i.e.* a polymer that contains an ester functional group in its main chain. Such a polymer can be made by reacting bifunctional monomers comprising acid and/or alcohol functional groups. The most common types of polyester used for carpet products are PET (polyethylene terephthalate) and PTT (polytrimethylene terephthalate).

A *carpet product* is a product that constitutes a final carpet (such as broadloom carpet, a carpet tile, a mat, rug, artificial turf, a runner) or part thereof.

*Fibrous* means consisting basically out of fibres. The term "basically" in this respect means that the basic mechanical constitution is arranged out of fibres: the fibres may however be impregnated or otherwise treated or combined with a non-fibrous material such that the end material also comprises other constituents than fibres. Typical fibrous sheets are woven and non-woven textile products, or combinations thereof.

A *sheet* is a substantially two dimensional mass or material, *i.e.* broad and thin, typically, but not necessarily, rectangular in form, and inherently has two opposite surfaces.

*Stitching* is a method of mechanically making a yarn part of an object by stitches or as if with stitches, such as by tufting, knitting, sewing, weaving etc.

A *layer* is a thickness of material, laid on or spread over a surface. A layer may be inhomogeneous with respect to thickness and may be discontinuous in the sense that it may have holes in it.

*Extrusion* is a process wherein a solid polymer material is conveyed through an elongated hollow member while being melted, and its molten mass is mixed on a sub-micrometer scale, in particular on a molecular scale when leaving the hollow member (which may be through a die, forcing the molten polymer to take a particular shape). Typically, extrusion is performed using one or more heated screws that fittingly rotate in a stationary barrel to perform the solid conveying, melting, pumping, mixing and shear refining functions of the extruder (see Chung Chan I., Extrusion of Polymers, Theory & Practice, 2000, 2nd edition, Hanser Publications).

*Homogenising* is a process in which different substances are being mixed to form a combination of these substances that has uniform composition and properties.

A *loop* of a yarn is a length of this yarn that may be curved away from the basic part of the yarn (not excluding that the loop is longer than the main part itself).

### EMBODIMENTS

In a first embodiment of the method according to the invention the amount of polyester adhesive (w/w) is between 0.5 and 25% with regard to the total amount of polyester in the carpet product. Above an amount of 25% it is believed that extrusion without de-mixing of the two different types of polyester is less easy to achieve, even when finding optimum extrusion settings (type of screw, number of screws, rotational speed, temperature, length of barrel, type of die etc.)

In another embodiment, the amount of polyester adhesive (w/w) is at least 1% with regard to the total amount of polyester in the carpet product. A minimum amount of polyester adhesive provides advantageous properties to the recycled polyester material, and has its use in an optional mechanical pre-processing of the carpet product before actual extrusion. In an embodiment the amount of polyester adhesive (w/w) is between 2% and 20%, optionally between 5 and 15%, with regard to the total amount of polyester in the carpet product.

In yet another embodiment wherein the carpet product is mechanically cut into pieces having dimensions below 20 cm in width and length (as is commonly done preceding extrusion), the carpet product pieces are compressed before being fed to an extruder to be homogenised. By compressing the fibrous carpet product, the feed towards the extruder (in kg/m³) is raised, making the extrusion process more reliable. Surprisingly, it appeared that the presence of the low molecular weight polyester adhesive enhances the result of the compression process in that a more compact (dense) material can be obtained using a known compression process such as a process based on centrifugal forces. In a further embodiment, the carpet product pieces are compressed to reach a bulk density of at least 0.3 g/cm³, preferably at least 0.5 g/cm³. In yet a further embodiment the carpet product pieces are compressed at an elevated temperature between room temperature and the melting temperature of the polyester adhesive, for example at a temperature between 80-100°C.

In an embodiment the fibrous sheet comprises a primary backing having polyester yarns stitched therein to form a pile on a front surface of this primary backing and loops at an opposite back surface of the primary carrier, the polyester adhesive being applied to the back surface of the primary carrier. Although other types of fibrous sheet materials are envisioned to be able and used in the current recycling process (for example a felted material consisting of compressed polyester fibres with a polyester adhesive mixed therethrough), this type of fibrous sheet material is used in very large quantities and appears to be very suitable for use in the current process. In a further embodiment the carpet product is made by contacting the back surface of the primary carrier with a surface of a hot body to at least partly melt the loops of the yarns to create a mass of molten material before the polyester adhesive is applied to this back surface. This material is even more suitable for use in the present method. It may be that the melting of the loops creates small scale alterations that make the product as a whole more suitable for use in an extrusion process in the presence of a polyester adhesive. In yet a further embodiment the carpet product is made by providing the surface of the hot body at a relative speed with respect to the back surface of the primary carrier, in particular by providing the surface of the hot body as a stationary object, the primary carrier being transported along the hot body. This appears to lead to a carpet product that is very suitable for recycling using a method according to the invention.

The invention will now be explained in more detail using the following specific figures and examples.

### EXAMPLES

Figure 1 is a schematic representation of the respective layers of a carpet product for use in the recycling method according to the invention.
Figure 2 schematically depicts a recycle set-up for use in the method according to the invention.

Example 1 describes a method to determine the crystallinity of a low molecular weight polyester adhesive.

Example 2 describes a method to determine the viscosity in Pa.s at 150°C of a low molecular weight polyester adhesive.

Example 3 describes a method to determine melting point of a high molecular weight polyester.

Example 4 describes a test to assess the usability of a recycled polyester material. Example 5 describes the extrusion of various types of low molecular weight polyester adhesive in combination with a high molecular weight polyester resin.

Example 6 describes the extrusion of various amounts of low molecular weight polyester adhesive in combination with a high molecular weight polyester resin.

### Figure 1

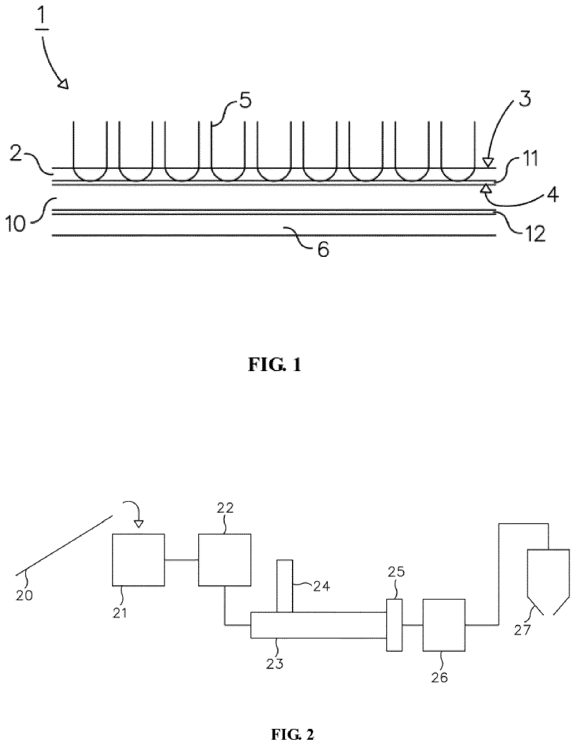

Figure 1 is a schematic representation of the respective layers of a carpet product, in this case a carpet tile, for use in the recycling method according to the invention. The tile comprises a first sheet 2, the so called primary backing. This sheet is a dual layer polyester sheet (the separate constituting layers not being indicated in figure 1), of which the basic layer is a sheet made of woven polyester tape. The warp yarns of this woven sheet consist of a 1.0 mm wide polyester tape of 42 Tex, and they are woven at 112 yarns per 10 cm. The weft yarns, made of a 2.0 mm wide polyester tape of 86 Tex, are woven at 59 yarns per 10 cm. This results in a mechanically relatively strong sheet, which has a very low weight of about 100 g/m² and is inexpensive to produce. The back surface (in figure 1 corresponding to the lower surface indicated with numeral 4) of this woven polyester sheet is covered with a thin felted fibrous layer. This layer is made by covering the back surface of the sheet with 5 dTex low melting polyester fibres (Tm about 230°C) having a length of about 50 mm. The fibres are provided in an amount of about 45 g/m². This layer is needle-felted to the woven polyester sheet, thereby forming a dual layer primary backing 2. Alternatively, a certain percentage of polyamide or other polymer fibres can be used in the felted layer next to the polyester fibres.

The primary backing is tufted with polyester (PET) yarns obtained from Shaw Industries, Dalton USA, having a melting point of 260°C. The yarns 5 extend from the first surface 3 of the sheet and are sealed to the second surface 4 of the sheet using a sealing process as known from WO 2014/198731 as described therein in conjunction with figures 3, 4 and 5 therein. This is a sealing method wherein the back surface of the primary carrier after the yarns have been applied therein is contacted with a surface of a hot body to at least partly melt the loops of the yarns to create a mass of molten material before the polyester adhesive is applied to this back surface. In particular the carpet product is made by providing the surface of the hot body at a relative speed with respect to back surface of the primary carrier, in particular by providing the surface of the hot body as a stationary object, the primary carrier being transported along the hot body. The weight of the primary backing with tufted yarns is about 700 g/m². The polyester adhesive used is a hot melt glue obtained from DSM Coating Resins, Zwolle, the Netherlands (having a crystallinity of 21% and a melt viscosity at 150°C of about 45 Pa.s), which is applied as a thin layer 11 (about 200 g/m²) to secure a resilient layer 10 to the primary backing. This layer is a knitted polyester layer (obtainable as Caliweb^{®} from TWE, Emsdetten, Germany), having a thickness of about 1½ mm. The weight of this knitted polyester layer is about 300 g/m². In order to provide sufficient mechanical stability, the carpet 1 comprises a second sheet 6, in this case a backing of a polyester needle felt backing fleece obtained as Qualitex Nadelvlies from TWE, Emsdetten, Germany. The weight of this second sheet is about 800 g/m² as a thin layer 12. This sheet is adhered to the layer 10 using a polyester hot melt glue applied at about 300 g/m². The total weight of the carpet tile is thus about 2.3 kg/m².

In this embodiment the different layers are interconnected using the same polyester adhesive applied in the form of a layer having a weight of about 100 - 300 g/m² (about 0.1 to 0.3 mm thick). However, different adhesives could be used for the two layers 11 and 12. It is also envisaged that before recycling de-coupling of one or more of the adhesive layers is necessary to arrive at a substantially pure polyester carpet product in view of recycling this product as a whole via extrusion. This could be the case for example when sheet 6 is made of a non-polyester polymer and thus needs to be separated before the remaining polyester carpet product. However, this could also be the case when the yarns are made of a different type of polymer (e.g. nylon), and thus the primary backing needs to be separated from the fibrous polyester sheet 10 and polyester backing 6 (in which case the sheet 10 and 6 together, with the adhesive layer in between constitute a substantially pure polyester carpet product in the sense of the present invention). In general, the adhesive may be provided as a layer having a thickness of less than 1 mm, usefully less than 0.5 mm, more usefully from 0.2 to 0.4 mm. Whereas in the prior art carpets on the market, the adhesive layer typically has a thickness well above 1 mm, applicant found that when reducing the thickness of this polyester adhesive layer to 1 mm or below an adequate adhesion can still be obtained.

### Figure 2

An extrusion recycling line that can be used for the recycling of a substantially pure polyester carpet product in line with the present invention is depicted schematically in Figure 2. The carpet product (not indicated in figure 2) is firstly conveyed by conveyor belt 20 (which includes a metal detector, not shown, to make sure any metal parts are detected such that they can be removed before entering the further process) and led to a combined cutting device 21 that includes a single shaft cutter with a width of 800 mm and a temperature controlled shredder shaft (operating at a temperature of 90°C). The material cut this way is fed into a shredder cyclone 22 which also operates at the same elevated temperature of 90°C. This cyclone is for further cutting the product and at the same time compressing the relatively fluffy carpet product into a mass having a density of between 0.4 and 0.6 g/cm³. The obtained compressed product is fed via a vacuum controlled dosing screw (not shown as such) into a high speed extruder 23 at a temperature about 20-30°C above the melt temperature of the high molecular weight polyester with a single screw design extruder (Starlinger, Germany) rotating at 180 rpm. The extruder is provided with a degassing unit 24. At the downstream end, the extruded material passes a filter 25 with backflush (type SPB-180-H, Starlinger). After that the extruded material is led to a water ring pelletizer 26 (type WRP 120R CC, Starlinger). The resulting material is stored in silo 27 until further use. Also, a different type of pelletizer was used, namely an automatic strand pelletizer (type A-SPU PUSG 100, Starlinger) and adequate results were obtained as well.

This process has been used to recycle various polyester carpet products such as complete carpet (primary backing plus secondary backing), a primary backing sealed according to the teachings of WO 2014/198731 and provided with a polyester adhesive to its back surface, and various types of polyester secondary backings (in each case a fibrous sheet of polyester yarns) provided with a layer of polyester adhesive to at least one of their surfaces. In each case the carpet products (being either complete carpet or a part thereof obtained after separating the non-polyester layers) comprised a fibrous sheet of high molecular weight PET having a melting point of around 260°C (being extremely high in viscosity) in combination with a polyester adhesive having a crystallinity between 5 and 35% and being very low in viscosity at 150°C (between 5 and 55 Pa.s). In each case, the extruder showed a good performance and a stable run independent of the type of carpet product. The typical throughput was 160 kg/h at a filter loss of about 3%. The intrinsic viscosity of the resulting pellets was measured and appeared to be around 0.5-0.6 dL/g for the end material as taken from the silo. By applying a common solid state post condensation technique (SSP-process; annealing the material at elevated temperatures at around 200-220°C for 6 - 10 hours), the intrinsic viscosity could be increased to about 0.7 to 1.0 dL/g depending on the type of starting material and process conditions used in the SSP process.

### Example 1

Example 1 describes how to determine the crystallinity of a polymer adhesive. The determination is based on ASTM standard D3418 ("Standard Test Method for Transition Temperatures and Enthalpies of Fusion and Crystallization of Polymers by Differential Scanning Calorimetry") using a Mettler ST**A**Re differential scanning calorimeter. For the actual measurement an adhesive sample of 10 mg is placed in a sample cup. This sample is kept in an oven for 15 minutes at 150°C. After this, the sample is cooled to 50°C and then heated to 250°C at a speed of 5°C/min. The sample is kept at 250°C for 1 minute and thereafter directly cooled to 25°C at a speed of 5°C/min. From the obtained DSC data the percentage of crystallinity in the sample polymer is calculated using the Mettler ST**A**Re SW 9.2 software.

For two polyester adhesives obtained via DSM Coating Resins, Zwolle, The Netherlands, which adhesives have excellent properties in order to obtain successful recycling in the sense of the present invention, the crystallinity was determined this way. For the first polyester adhesive (denoted "A"), being a low molecular weight PET (Mw = 18,704 g/mol) based on diethyleneglycol, butanediol, adipic acid and terephthalic acid, the crystallinity was 11%. For the other adhesive (denoted "B"), also a low molecular weight adhesive (Mw = 25,541 g/mol), but being based on hexanediol and butanediol, next to adipic acid and terephthalic acid, the crystallinity was 15%.

In an alternative embodiment of the adhesive A, sebacic acid was used instead of adipic acid. This adhesive had a crystallinity of 14%. In another embodiment wherein as the alcohol component a mixture of ethanediol and hexanediol was reacted with terephthalic acid, the crystallinity arrived at was 26%. By varying the starting components and or relative amounts used, adequate adhesive could be obtained having a crystallinity between 5-35%, all having a low melt viscosity of about 5-55 Pa.s at 150°C (established using a method as described under example 2).

### Example 2

The viscosity of a polymer adhesive is measured by using a cone and plate viscometer (Brookfield CAP 2000+, available from Brookfield Ametek, Middleboro, MA, USA) with a 24 mm diameter spindle and a cone angle of 1.8 degrees (Brookfield Cap 2000+ spindle #4). Samples are heated to 150°C. At 150°C the spindle is lowered on the sample. The sample is measured at 21 rpm for 30 seconds. The viscosity is determined automatically by the viscometer's default algorithm. For the two adhesives (A and B) indicated here above under Example 1, the viscosities are 6.3 Pa.s and 27.1 Pa.s at 150°C respectively. For the alternative adhesives mentioned in Example 1, viz. the adhesives having a crystallinity of 26% and 14%, the viscosity established this way was 28.2 Pa.s and 24 Pa.s respectively.

### Example 3

Example 3 describes how to determine the melting point of a high molecular weight polyester. The determination is based on ASTM standard D3418 ("Standard Test Method for Transition Temperatures and Enthalpies of Fusion and Crystallization of Polymers by Differential Scanning Calorimetry") using a Mettler Toledo DSC 821^{e} differential scanning calorimeter. For the actual measurement a polyester sample of 10 mg is placed in a sample cup. After this, the sample is cooled to -50°C and then heated to 300°C at a speed of 5°C/min. The sample is kept at 300°C for 1 minute and thereafter directly cooled to 25°C at a speed of 5°C/min. From the obtained DSC plot the melting point can be read off.

### Example 4

This example describes a test to assess the usability of a recycled polyester material. This test shows that a recycled polyester material obtainable with a method according to the invention has a practical use as a polymer yarn, despite the fact that the new material intrinsically differs in properties from virgin yarn-like polyester because of the mixing in of a low molecular weight polyester material. The new material is made using an extrusion process, homogenising both polyester materials and forming a new material.

Three of such new polyester materials were prepared at room temperature by mixing a standard high molecular weight virgin polyethylene terephthalate resin (D04-300 obtained from Cumapol, Netherlands, having an intrinsic viscosity iV of 0.8 dL/g, being a copolymer based on 2% isophthalic acid) with a low molecular weight polyester adhesive (Uralac CP9250 SH XP obtained from DSM, Netherlands, having a crystallinity of 21%, a viscosity of 40-45 Pa.s at 150°C, and an Mw of 29,900 g/mol) in three different proportions, viz. 5% adhesive (sample BS), 10% (sample CS), and 15% (sample DS) adhesive (the other amount being polyester yarn material to arrive at 100%). The reference A and the three polyester blends BS - DS were then dried for 40 hrs. at 80°C. Then, the prepared polyester mixtures were added via a hopper equipped with a screw operating at a speed of 60 rpm to a single screw extruder (Leistritz, screw size 34 mm, screw speed 120 rpm) operating at 290°C in all 9 zones with a total residence time of the molten material of ca. 2 minutes. The resulting polymer melt string was cooled down in a water bath (room temperature) and, subsequently, the cooled polymer string was pelletized.

The reference A and the three polyester blends BS - DS were subjected to spinning to produce partially oriented yarn consisting of 48 filaments and drawing to obtain draw textured yarn. Prior to the spinning and drawing experiments the reference A and the three polyester blends BS - DS were dried in an oven at 60°C for 10 hrs. The reference A and the three polyester blends BS - DS were subjected to spinning to produce partially oriented yarn using an in-home spinning machine. The extruder was equipped with a spin pomp (16 rpm) operating at 260°C to ensure continuous feed to the spinneret. At the spinneret the polymer melt was split into 48 filaments, after which the filaments were cooled down over ca. 3 m height, and bundled to form a polyester yarn. The obtained polyester yarn was wound using 3 rolls operating at different speeds. In total, for each of the reference A and the polyester blends BS - DS, 2 spools of yarn were prepared. The spools of yarn obtained were then subjected to drawing to produce draw textured yarn by using an in-home drawing machine. Drawing is carried out by stretching the polyester yarn in two steps between three sets of rollers (draw rollers) operating at different speeds. Textured yarn could be produced this way for each of the materials, including the reference material A and each of the polyester blends BS - DS.

### Example 5

Example 5 describes the extrusion of various types of low molecular weight polyester adhesive in combination with a high molecular weight polyester resin.

Dry-blends of high molecular weight virgin polyethylene terephthalate resin (Invista T49H with a melting temperature of about 260°C, having an intrinsic viscosity of 0,85 dL/g) with three types of low molecular weight polyester adhesives were prepared. Type I of the low molecular weight polyester adhesive is a mixture of type la with a melting temperature of about 60°C, a viscosity of 1,2 Pa.s and a crystallinity of 72% and type Ib with a melting temperature of 58°C, a viscosity of 2,2 Pa.s and a crystallinity of 60%.

Type II of the low molecular weight polyester adhesive is a mixture of type Ila with a melting temperature of about 55°C, a viscosity of 51,4 Pa.s and a crystallinity of 37% and type Ilb with a melting temperature of about 55°C, a viscosity of 57 Pa.s and a crystallinity of 36%.

Type III of the low molecular weight polyester adhesive has a melting temperature of about 120°C, a viscosity of about 30 Pa.s and a crystallinity of about 21%.

The adhesive resin materials were cryo-milled (and dried) before application in the extrusion process. All three types of adhesive were mixed in at a weight ratio of 10% (w/w).

The extrusion was performed in a 45 mm single screw extruder (Collin E45P, 31D screw length and 8-10 kg/hr throughput) operating at a temperature of 270°C. Whereas the extrusion of the composition with type III adhesive runs fairly continuous yielding a regular polymer strand which is stable and rarely breaks, the extrusion of the composition with type I adhesive is not continuous, showing a significant drop in die pressure and providing frequent strand breakage. Also extrusion of the composition with type II adhesive was less continuous showing a small drop in die pressure and providing more strand breakage compared to the composition with type III adhesive.

### Example 6

Example 6 describes the extrusion of various amounts of low molecular weight polyester adhesive in combination with a high molecular weight polyester resin.

Dry-blends of high molecular weight virgin polyethylene terephthalate resin (Invista T49H with a melting temperature of about 260°C, having an intrinsic viscosity of 0,85 dL/g) with low molecular weight polyester adhesive were prepared. The low molecular weight polyester adhesive was mixed in at weight ratios of 1, 10, 25 and 30% (w/w) (or wt%).

The low molecular weight polyester adhesive has a melting temperature of about 120°C, a viscosity of about 30 Pa.s and a crystallinity of about 21%.

The adhesive resin materials were cryo-milled (and dried) before application in the extrusion process.

The extrusion was performed in a 45 mm single screw extruder (Collin E45P, 31D screw length and 8-10 kg/hr throughput) and operated at a temperature of 270°C. Whereas it was possible to draw strands after extrusion of the compositions with 1, 10 and 25% (w/w) adhesive, the extrusion of the composition with 30% (w/w) adhesive resulted in often occurring strand breakage, thus hampering the drawing of regular strands.

## Claims

1. Method for recycling a carpet product, the carpet product comprising a fibrous sheet comprising polymer yarns, wherein at least one surface of the sheet is provided with a layer of polymer adhesive, **characterised in that** the carpet product is a substantially pure polyester carpet product, wherein the polymer yarns comprise polyester having a molecular weight Mw above 50,000 g/mol and a melting point between 180 and 300°C, the adhesive is a polyester adhesive having a crystallinity between 5% and 35% and a viscosity of 5-55 Pa.s at 150°C, the method comprising homogenising the carpet product by extrusion, wherein the melting point, crystallinity and viscosity are determined as indicated in the specification.

2. Method according to claim 1, **characterised in that** the amount of polyester adhesive is between 0.5 and 25% w/w with regard to the total amount of polyester in the carpet product.

3. Method according to any of the preceding claims, **characterised in that** the amount of polyester adhesive is at least 1% w/w with regard to the total amount of polyester in the carpet product.

4. Method according to any of the preceding claims, **characterised in that** the amount of polyester adhesive is between 2% and 20% w/w, optionally between 5 and 15% w/w, with regard to the total amount of polyester in the carpet product.

5. Method according to any of the preceding claims, wherein the carpet product is mechanically cut into pieces having dimensions below 20 cm in width and length, **characterised in that** the carpet product pieces are compressed before being fed to an extruder to be homogenised.

6. Method according to claim 5, **characterised in that** the carpet product pieces are compressed to reach a bulk density of at least 0.3 g/cm³, preferably at least 0.5 g/cm³.

7. Method according to any of the claims 5 and 6, **characterised in that** the carpet product pieces are compressed at an elevated temperature between room temperature and the melting temperature of the polyester adhesive.

8. Method according to claim 7, **characterised in that** the carpet product pieces are compressed at a temperature between 80-100°C.

9. Method according to any of the preceding claims, **characterised in that** the fibrous sheet comprises a primary backing having polyester yarns stitched therein to form a pile on a front surface of this primary backing and loops at an opposite back surface of the primary carrier, the polyester adhesive being applied to the back surface of the primary carrier.

10. Method according to claim 9, **characterised in that** the carpet product is made by contacting the back surface of the primary carrier with a surface of a hot body to at least partly melt the loops of the yarns to create a mass of molten material before the polyester adhesive is applied to this back surface.

11. A method according to claim 10, **characterised in that** the carpet product is made by providing the surface of the hot body at a relative speed with respect to back surface of the primary carrier, in particular by providing the surface of the hot body as a stationary object, the primary carrier being transported along the hot body.

12. Recycled polyester obtainable by a method according to any of the preceding claims.

13. Fibres comprising the polyester material of claim 12.

14. Fibrous products comprising the fibres according to claim 13.

15. A polyester adhesive having a crystallinity between 5% and 35% and a viscosity of 5-55 Pa.s at 150°C, wherein the crystallinity and viscosity are determined as indicated in the specification.

## Patentansprüche

1. Verfahren zur Wiederverwertung eines Teppichprodukts, wobei das Teppichprodukt eine faserige Lage umfasst, die Polymergarne umfasst, wobei mindestens eine Oberfläche der Lage mit einer Schicht aus Polymerklebstoff ausgestattet ist, **dadurch gekennzeichnet, dass** das Teppichprodukt ein im Wesentlichen reines Polyesterteppichprodukt ist, wobei die Polymergarne Polyester mit einem Molekulargewicht Mw über 50.000 g/mol und einem Schmelzpunkt zwischen 180 und 300 °C umfassen, der Klebstoff ein Polyesterklebstoff mit einer Kristallinität zwischen 5 % und 35 % und einer Viskosität von 5 bis 55 Pa·s bei 150 °C ist, wobei das Verfahren Homogenisieren des Teppichprodukts durch Extrusion umfasst, wobei der Schmelzpunkt, die Kristallinität und Viskosität wie in den technischen Angaben beschrieben bestimmt werden.

2. Verfahren nach Anspruch 1, **dadurch gekennzeichnet, dass** die Menge an Polyesterklebstoff in Bezug auf die Gesamtmenge an Polyester in dem Teppichprodukt zwischen 0,5 und 25 % Gew./Gew. liegt.

3. Verfahren nach einem der vorhergehenden Ansprüche, **dadurch gekennzeichnet, dass** die Menge an Polyesterklebstoff in Bezug auf die Gesamtmenge an Polyester in dem Teppichprodukt mindestens 1 % Gew./Gew. beträgt.

4. Verfahren nach einem der vorhergehenden Ansprüche, **dadurch gekennzeichnet, dass** die Menge an Polyesterklebstoff in Bezug auf die Gesamtmenge an Polyester in dem Teppichprodukt zwischen 2 % und 20 % Gew./Gew., gegebenenfalls zwischen 5 und 15 % Gew./Gew. liegt.

5. Verfahren nach einem der vorhergehenden Ansprüche, wobei das Teppichprodukt mechanisch in Stücke mit Abmessungen von weniger als 20 cm in Breite und Länge geschnitten wird, **dadurch gekennzeichnet, dass** die Teppichproduktstücke komprimiert werden, bevor sie in einen Extruder eingespeist werden, um homogenisiert zu werden.

6. Verfahren nach Anspruch 5, **dadurch gekennzeichnet, dass** die Teppichproduktstücke komprimiert werden, um eine Schüttdichte von mindestens 0,3 g/cm³, vorzugsweise mindestens 0,5 g/cm³ zu erreichen.

7. Verfahren nach einem der Ansprüche 5 und 6, **dadurch gekennzeichnet, dass** die Teppichproduktstücke bei einer erhöhten Temperatur zwischen Raumtemperatur und der Schmelztemperatur des Polyesterklebstoffs komprimiert werden.

8. Verfahren nach Anspruch 7, **dadurch gekennzeichnet, dass** die Teppichproduktstücke bei einer Temperatur zwischen 80 und 100 °C komprimiert werden.

9. Verfahren nach einem der vorhergehenden Ansprüche, **dadurch gekennzeichnet, dass** die faserige Lage einen Primärträger umfasst, worin Polyestergarne vernäht sind, um einen Flor auf einer Vorderseite dieses Primärträgers und Schlaufen auf einer entgegengesetzten Rückseite des Primärträgers zu bilden, wobei der Polyesterkleber auf die Rückseite des Primärträgers aufgebracht ist.

10. Verfahren nach Anspruch 9, **dadurch gekennzeichnet, dass** das Teppichprodukt gefertigt wird, indem die Rückseite des Primärträgers mit einer Oberfläche eines heißen Körpers kontaktiert wird, um die Schlaufen der Garne mindestens teilweise zu schmelzen, um eine Masse aus geschmolzenem Material zu erzeugen, bevor der Polyesterklebstoff auf diese Rückseite aufgebracht wird.

11. Verfahren nach Anspruch 10, **dadurch gekennzeichnet, dass** das Teppichprodukt gefertigt wird, indem die Oberfläche des heißen Körpers mit einer relativen Geschwindigkeit in Bezug zu der Rückseite des Primärträgers bereitgestellt wird, insbesondere durch Bereitstellen der Oberfläche des heißen Körpers als stationäres Objekt, wobei der Primärträger an dem heißen Körper entlang transportiert wird.

12. Wiederverwerteter Polyester, der nach einem Verfahren gemäß einem der vorhergehenden Ansprüche erhältlich ist.

13. Fasern, umfassend das Polyestermaterial nach Anspruch 12.

14. Faserige Produkte, umfassend die Fasern gemäß Anspruch 13.

15. Polyesterklebstoff mit einer Kristallinität zwischen 5 % und 35 % und einer Viskosität von 5 bis 55 Pa·s bei 150 °C, wobei die Kristallinität und Viskosität wie in den technischen Angaben beschrieben bestimmt werden.

## Revendications

1. Procédé pour le recyclage d'un produit de tapis, le produit de tapis comprenant une feuille fibreuse comprenant des fils de polymère, au moins une surface de la feuille étant pourvue d'une couche d'adhésif polymérique, **caractérisé en ce que** le produit de tapis est un produit de tapis de polyester sensiblement pur, les fils de polymère comprenant du polyester possédant un poids moléculaire Mw supérieur à 50 000 g/mole et un point de fusion compris entre 180 et 300 °C, l'adhésif étant un adhésif de polyester possédant une cristallinité comprise entre 5 % et 35 % et une viscosité de 5 à 55 Pa.s à 150 °C, le procédé comprenant l'homogénéisation du produit de tapis par extrusion, le point de fusion, la cristallinité et la viscosité étant déterminés comme indiqué dans la description.

2. Procédé selon la revendication 1, **caractérisé en ce que** la quantité d'adhésif de polyester est comprise entre 0,5 et 25 % p/p par rapport à la quantité totale de polyester dans le produit de tapis.

3. Procédé selon l'une quelconque des revendications précédentes, **caractérisé en ce que** la quantité d'adhésif de polyester est d'au moins 1 % p/p par rapport à la quantité totale de polyester dans le produit de tapis.

4. Procédé selon l'une quelconque des revendications précédentes, **caractérisé en ce que** la quantité d'adhésif de polyester est comprise entre 2 % et 20 % p/p, éventuellement entre 5 et 15 % p/p, par rapport à la quantité totale de polyester dans le produit de tapis.

5. Procédé selon l'une quelconque des revendications précédentes, le produit de tapis étant découpé mécaniquement en morceaux possédant des dimensions inférieures à 20 cm de largeur et de longueur, **caractérisé en ce que** les morceaux de produit de tapis sont comprimés avant d'être alimentés à une extrudeuse pour être homogénéisés.

6. Procédé selon la revendication 5, **caractérisé en ce que** les morceaux de produit de tapis sont comprimés pour atteindre une densité en vrac d'au moins 0,3 g/cm³, préférablement d'au moins 0,5 g/cm³.

7. Procédé selon l'une quelconque des revendications 5 et 6, **caractérisé en ce que** les morceaux de produit de tapis sont comprimés à une température élevée comprise entre la température ambiante et le point de fusion de l'adhésif de polyester.

8. Procédé selon la revendication 7, **caractérisé en ce que** les morceaux de produit de tapis sont comprimés à une température comprise entre 80 et 100 °C.

9. Procédé selon l'une quelconque des revendications précédentes, **caractérisé en ce que** la feuille fibreuse comprend un support principal possédant des fils de polyester cousus dans celui-ci pour former une pile sur une surface avant de ce support principal et des boucles au niveau d'une surface arrière opposée du support principal, l'adhésif de polyester étant appliqué à la surface arrière du support principal.

10. Procédé selon la revendication 9, **caractérisé en ce que** le produit de tapis est fabriqué en mettant en contact la surface arrière du support principal avec une surface d'un corps chaud pour faire fondre au moins partiellement les boucles des fils pour créer une masse de matière fondue avant que l'adhésif de polyester ne soit appliqué à cette surface arrière.

11. Procédé selon la revendication 10, **caractérisé en ce que** le produit de tapis est fabriqué en fournissant la surface du corps chaud à une vitesse relative par rapport à la surface arrière du support principal, en particulier en fournissant la surface du corps chaud comme un objet stationnaire, le support principal étant transporté le long du corps chaud.

12. Polyester recyclé pouvant être obtenu par un procédé selon l'une quelconque des revendications précédentes

13. Fibres comprenant le matériau de polyester selon la revendication 12.

14. Produits fibreux comprenant les fibres selon la revendication 13.

15. Adhésif de polyester possédant une cristallinité comprise entre 5 % et 35 % et une viscosité de 5 à 55 Pa.s à 150 °C, la cristallinité et la viscosité étant déterminées comme indiqué dans la description.
